Europäisches Patentamt

European Patent Office

Office européen des brevets

(11) Veröffentlichungsnummer: **0 123 009**
**B1**

# EUROPÄISCHE PATENTSCHRIFT

(45) Veröffentlichungstag der Patentschrift:
**13.05.87**

(21) Anmeldenummer: **83890120.5**

(22) Anmeldetag: **20.07.83**

(51) Int. Cl.⁴: **B 65 G 49/06**

(54) Vorrichtung zum Fördern von tafelförmigen Elementen.

(30) Priorität: **25.04.83 AT 1498/83**

(43) Veröffentlichungstag der Anmeldung:
**31.10.84 Patentblatt 84/44**

(45) Bekanntmachung des Hinweises auf die Patenterteilung:
**13.05.87 Patentblatt 87/20**

(84) Benannte Vertragsstaaten:
**BE CH DE FR GB IT LI NL**

(56) Entgegenhaltungen:
**DE - A - 3 038 425**
**DE - B - 2 846 785**
**FR - A - 2 195 566**

(73) Patentinhaber: **Lisec, Peter, Bahnhofstrasse 34,**
**A-3363 Amstetten-Hausmening (AT)**

(72) Erfinder: **Lisec, Peter, Bahnhofstrasse 34,**
**A-3363 Amstetten-Hausmening (AT)**

(74) Vertreter: **Beer, Otto, Dipl.-Ing. et al, Lindengasse 8,**
**A-1071 Wien (AT)**

## Beschreibung

Die Erfindung betrifft eine Vorrichtung zum Fördern von tafelförmigen Elementen, insbesondere von Isolierglasscheiben, mit einer horizontalen Förderbahn, durch welche die aufrecht stehend bewegten tafelförmigen Elemente von unten abgestützt sind, und mit einer seitlichen Abstützung für die Bauteile, wobei in der horizontalen Förderbahn eine Unterbrechung für die Aufnahme eines Bearbeitungswerkzeuges, insbesondere einer Düse zum Versiegeln der Randfugen von Isolierglasscheiben, vorgesehen ist, mit einer jedes tafelförmige Element an mindestens einer seiner Seitenflächen erfassenden Schleppvorrichtung, die auf einer parallel zur horizontalen Förderbahn bzw. zur Förderrichtung ausgerichteten Führung über einen Schlitten im Bereich der Unterbrechung der horizontalen Förderbahn hin- und herverschiebbar geführt ist, wobei sich der Bewegungshub der Schleppvorrichtung bis über die an die Unterbrechung in der Förderbahn anschliessenden Bereiche der Förderbahn erstreckt.

Isolierglasscheiben werden im Zuge ihrer Herstellung aufrecht stehend auf horizontalen Förderbahnen transportiert. Diese Förderbahnen können als Transportvorrichtungen einfache Förderbänder besitzen, wobei auch schon mit Noppen bestückte Förderbänder vorgeschlagen worden sind (vgl. DE-B1-2 846 785). Eine weitere Förderbahn, die insbesondere für im Randfugenbereich mit Versiegelungsmasse gefüllte Isolierglasscheiben geeignet ist, ist in der DE-A1-3 038 425 beschrieben.

Oft stellt sich beim Fördern tafelförmiger Bauteile, so auch beim Fördern von Isolierglasscheiben, das Problem, einen genau gleichmässigen Transport sicherzustellen. Hiezu ist beispielsweise das aus der DE-A1-3 038 425 bekannte Fördersystem bestens geeignet, da die die Isolierglasscheiben unten erfassenden Backen auch zur Erzielung des nötigen Reibungsschlusses gegen die Isolierglasscheiben gedrückt werden können. Dies ist aber nicht immer ausreichend. Insbesondere wenn in den Förderbahnen Bearbeitungswerkzeuge (z.B. Versiegelungsdüsen für Isolierglasscheiben) vorgesehen sind, so dass die Förderbahnen Unterbrechungen aufweisen.

Einseitig an vertikal stehenden Isolierglasscheiben angreifende Saugheber, wie sie aus Fig. 7 und 8 der DE-B1-2 846 785 bekannt sind, haben den Nachteil, dass die Gefahr besteht, dass sich die nur durch die plastische Dicht- bzw. Klebemasse über den Abstandhalterrahmen zusammengehaltenen Glasscheiben gegeneinander verschieben bzw. voneinander lösen. Bei grösseren Elementen besteht überdies eine erhebliche Bruchgefahr, insbesondere wenn Elemente mit wenigstens einer dünneren Glasscheibe («Schallschutzelemente») an der dünneren Glasscheibe erfasst werden.

Isolierglasrohlinge, deren Scheiben sich gegeneinander verschoben bzw. voneinander gelöst haben, stellen Ausschuss dar.

Auch die in der DE-B-2 544 302 beschriebene Transportvorrichtung für den Transport liegender Isolierglasscheiben, bei welcher Saugteller das alleinige Transportmittel für beidseitig geführte Isolierglasscheiben darstellen , ist nicht geeignet, das geschilderte Problem des Förderns von tafelförmigen Bauteilen im Bereich von Unterbrechungen einer Förderbahn zu lösen.

Sinngemässes gilt für die aus der DE-B-2 400 388 bekannte Fördervorrichtung.

Eine Vorrichtung zum Fördern von tafelförmigen Bauteilen der eingangs genannten Gattung ist aus der FR-A-2 195 566 bekannt. Bei dieser bekannten Fördervorrichtung sind für den Antrieb der horizontalen Förderbahn, die durch eine Reihe von Förderwalzen gebildet ist, und für den Antrieb des die Schleppeinrichtung tragenden Schlittens voneinander unabhängige Antriebe vorgesehen. Es sind der FR-A-2 195 566 auch keine konkreten Anregungen zu entnehmen, wie diese beiden Antriebe bzw. die durch sie angetriebene Schleppeinrichtung einerseits mit der horizontalen Förderbahn anderseits synchronisiert werden könnte.

Aufgabe der Erfindung ist es, eine Vorrichtung anzugeben, mit der tafelförmige Bauteile auf Förderbahnen, die auch bereits bekannte Förderbahnen sein können, auch im Bereich von Unterbrechungen derselben sicher und mit konstanter Geschwindigkeit gefördert werden können, wobei die Schleppeinrichtung mit der horizontalen Förderbahn auf einfache Weise synchronisiert werden kann.

Erfindungsgemäss wird dies dadurch erreicht, dass der Schlitten der Schleppvorrichtung auf einem parallel zur Förderrichtung ausgerichteten Zylinder geführt ist, in dem ein zum Hin- und Herverschieben der Schleppvorrichtung durch Beaufschlagen mit Druckmittel hin- und herveschiebbarer Kolben aufgenommen ist, wobei die Schleppvorrichtung mit dem im Zylinder hin- und herverschiebbaren Kolben magnetisch gekuppelt ist, die Schleppvorrichtung bei ihrer Bewegung in Förderrichtung mit der die Förderbahn bildenden Transportvorrichtung synchronisiert ist, dass zur Synchronisierung der Schleppvorrichtung oder des Schlittens mit der die Förderbahn bildenden Transportvorrichtung als Kupplung sowohl an der Transportvorrichtung bzw. bei Förderbahnen mit mehreren Transportvorrichtungen an wenigstens einer Transportvorrichtung als auch am Schlitten der Schleppvorrichtung aneinander anlegbare Anschläge vorgesehen sind und dass der am Schlitten vorgesehene Anschlag durch Druckbeaufschlagung des Kolbens im Zylinder in Förderrichtung gesehen von hinten an den Anschlag an der Transportvorrichtung anlegbar ist.

Dadurch, dass die Bewegungsgeschwindigkeit der Schleppvorrichtung, wenn sich diese in Förderrichtung bewegt, genau mit der Geschwindigkeit der Förderbahn synchronisiert ist, ist ein absolut gleichmässiger Transport der tafelförmigen Elemente auch im Bereich von Unterbrechungen der Fördebahn gewährleistet. Von besonderem Vorteil bei der Erfindung ist es weiters, dass es die erfindungsgemäss vorgeschlagene Ausführungsform des Antriebes für die Schleppvorrichtung ohne weiteres gestattet, die Schleppvorrichtung mit der Transportbahn in einfacher Weise dadurch zu synchronisieren, dass die Anschläge in Anlage aneinander gebracht werden. Bei der erfindungsgemässen Vorrichtung ist somit die Schleppvorrichtung durch die aneinander anliegenden Anschläge daran gehindert, sich schneller zu bewegen als die Transportvorrichtung.

Handelt es sich bei der Förderbahn um eine Förderbahn, wie sie aus der DE-A1-3 038 425 bekannt ist, dann kann der von den an den Isolierglasscheiben angreifenden Fördergliedern auf die Isolierglasscheiben ausgeübte Druck ohne Beeinträchtigung der Gleichmässigkeit der Fördergeschwindigkeit verringert werden.

Im Rahmen der Erfindung kann vorgesehen sein, dass die Schleppvorrichtung mindestens einen quer zur Förderrichtung auf das zu befördernde tafelförmige Element, vorzugsweise durch einen Druckmittelmotor vorschiebbaren Saugteller umfasst. Diese Ausführungsform ist für das Fördern von Isolierglasscheiben besonders geeignet.

Die erfindungsgemässe Vorrichtung, die sich noch dadurch auszeichnen kann, dass eine parallel zum Zylinder verlaufende Führungsschiene vorgesehen ist und dass der Schlitten sowohl durch einen auf der Aussenfläche des Zylinders gleitenden Ring als auch auf der Führungsschiene geführt ist, ist besonders zur Kombination mit der aus der DE-A1-3 038 425 bekannten Förderbahn geeignet.

Weitere Merkmale und Einzelheiten der Erfindung ergeben sich aus der nachfolgenden Beschreibung der in den Zeichnungen schematisch wiedergegebenen Ausführungsbeispiele.

Es zeigt:

Figur 1 in Draufsicht eine erste Ausführungsform schematisch,

Figur 2 eine an sich bekannte Ausführungsform der die tafelförmigen Elemente von unten abstützenden Haken der Förderbahn und

Figur 3 eine weitere Ausführungsform schematisch und in Draufsicht.

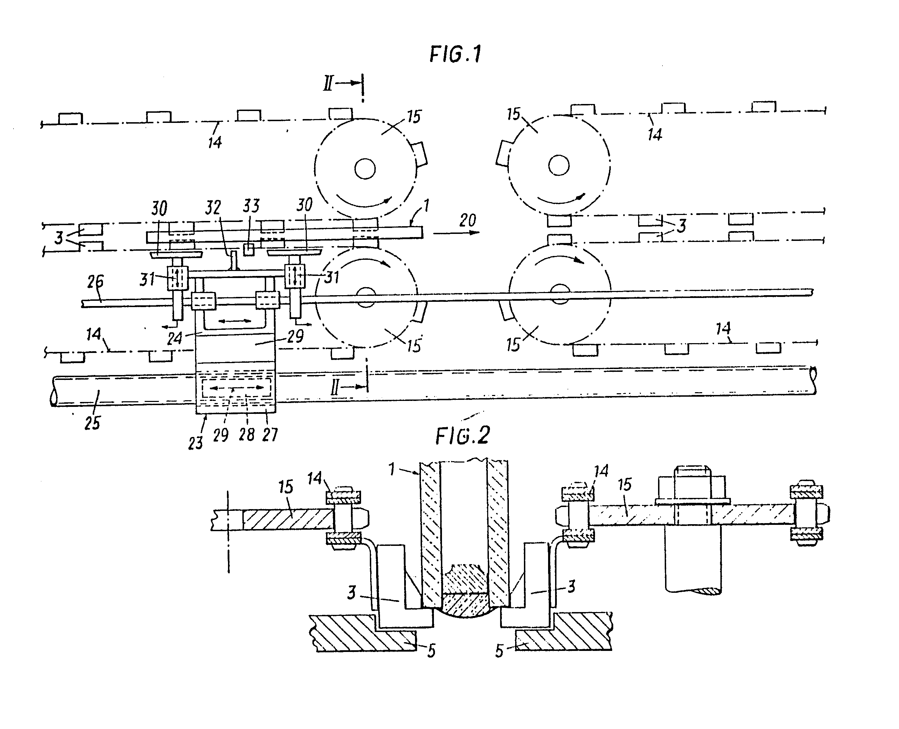

Die in den Figuren 1 und 2 gezeigte Förderbahn umfasst jeweils zwei um Umlenkräder 15 umlaufende Ketten 14, an welchen Haken befestigt sind, welche die in Figur 2 im Schnitt gezeigte Form besitzen und Isolierglaselemente 1 unten nur im Bereich der Aussenkanten derselben abstützen. Die sich in Förderrichtung (Pfeil 20) bewegenden Trume der Ketten 14 sind auf Schienen 5 geführt.

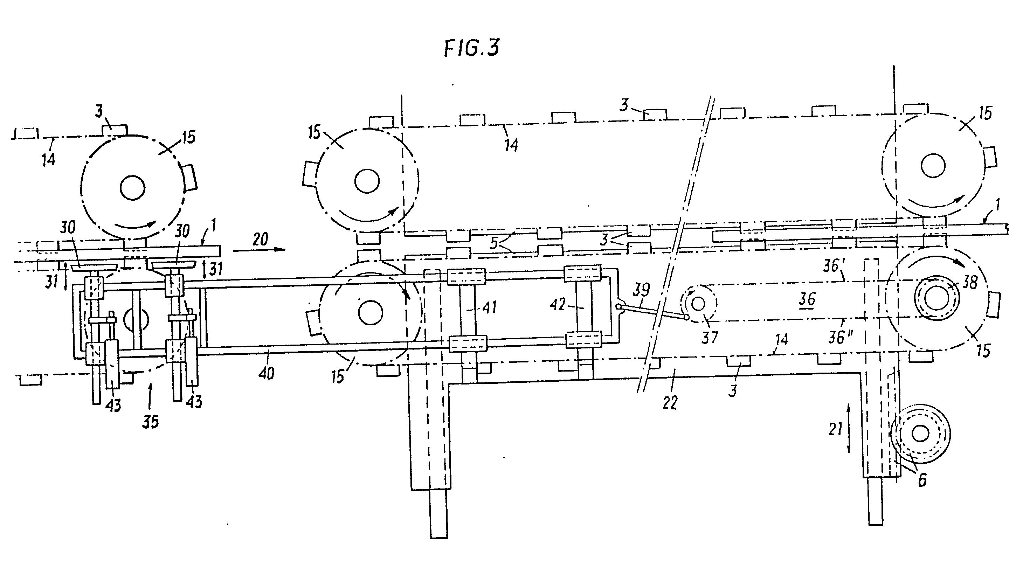

Zur Anpassung an verschieden dicke Isolierglaselemente 1 kann, wie in Figur 3 gezeigt, eine der beiden Ketten 14 gegenüber der anderen Kette in Richtung des Doppelpfeiles 21 verschoben werden. Hiezu sind die Umlenkräder 15 für die quer zur Förderrichtung (Pfeil 20) verschiebbare Kette 14 und die Stützschiene 5 auf einem quer zur Förderrichtung (Pfeil 21) mit Hilfe eines Zahnstangen-Zahnradgetriebes 6 verschiebbaren Träger 22 befestigt.

Bei der in Figur 1 gezeigten Ausführungsform ist ein die Schleppvorrichtung 23 bildender Schlitten 24 einerseits auf einem Zylinder 25 und einer Führungsschiene 26 verschiebbar geführt, wobei sich Zylinder 25 und Schiene 26 parallel zur Förderrichtung 20 erstrecken. Sowohl der Zylinder 25 als auch die Schiene 26 sind beispielsweise auf dem in Figur 1 nicht gezeigten Träger 22 montiert.

Zur Führung des Schlittens 24 besitzt dieser einen Ring 27, der auf der Aussenseite des Zylinders 25 z.B. über Kugellager gleitet. Im Zylinder 25 ist ein Kolben 28 vorgesehen, der durch Druckbeaufschlagung des an seinen Enden geschlossenen Zylinders in Richtung des Doppelpfeiles 29 hin- und hervergeschoben werden kann. Um den Schlitten 24 mit dem Kolben 28 zu kuppeln, ist der Kolben 28 als Permanentmagnet ausgebildet und der Schlitten 24 besitzt einen entsprechenden Gegenmagneten oder einfach einen Block aus magnetisierbarem Werkstoff, wie Eisen, so dass der Kolben 28 mit dem Schlitten 24 magnetisch gekuppelt ist. Am Schlitten 24 sind zwei Saugteller 30 vorgesehen, die durch nicht gezeigte Druckmittelmotoren in Richtung der Doppelpfeile 31 vor- bzw. zurückbewegt werden können.

Weiters trägt der Schlitten 24 einen Anschlag 32, der mit einem oder einem von mehreren an den Ketten 14 vorgesehenen Anschlag 33 zusammenwirkt, um die Bewegungsgeschwindigkeit der Schleppvorrichtung 23 mit der Fördergeschwindigkeit des Isolierglaselementes 1 genau in Übereinstimmung zu halten. Im gezeigten Ausführungsbeispiel wird der am Schlitten 24 vorgesehene Anschlag 32, in Förderrichtung 20 gesehen, von hinten gegen den Anschlag 33 gedrückt, indem der Kolben 28 entsprechend mit Druck beaufschlagt wird. Sobald der Schlitten 24 mit den die Fördebahn bildenden Ketten hinsichtlich der Transportgeschwindigkeit synchronisiert ist, werden die Saugteller 30 vorgeschoben und mit Vakuum beaufschlagt, so dass die Isolierglasscheibe 1 nicht nur von der Förderbahn, sondern auch von der Schleppvorrichtung 23 vorwärtsbewegt wird. Dies ist insbesondere von Bedeutung, wenn sich, wie in Figur 1 und 3 gezeigt, im Bereich der Förderbahn Unterbrechungen ergeben. Derartige Unterbrechungen sind für die Aufnahme von Bearbeitungswerkzeugen, insbesondere von Fülldüsen, bei Vorrichtungen zum Versiegeln von Isolierglasrohlingen, unvermeidlich.

Gemäss einer nicht gezeigten Ausführungsform können Anschläge 33 auch am in Figur 1 rechts liegenden Kettenzug 14 vorgesehen sein, wobei dann zweckmässigerweise der Schlitten 24 der Schleppvorrichtung 23 einen zweiten Anschlag 32 trägt, der mit dem Anschlag 33 der in Förderrichtung 20 gesehen zweiten Förderbahn zusammenwirkt. Bei dieser Ausführungsform ist eine ruckfreie Übergabe der Schleppvorrichtung 23 von der ersten auf die zweite Förderbahn gewährleistet. Freilich können an einem oder beiden der Förderbahnen mehrere Anschläge 33 vorgesehen sein.

Bei der in Figur 3 gezeigten Ausführungsform ist zur Synchronisierung der Bewegung der Schleppvorrichtung 35 ein endloses, langgestrecktes Element 36 vorgesehen, dessen Trume parallel zur Förderrichtung 20 ausgerichtet sind. Im gezeigten Ausführungsbeispiel wird eines der beiden Umlenkräder 37 für das langgestreckte Element 36 über eine lösbare Kupplung 38 an einem der Umlenkräder 15 für die Kettenzüge 14 angetrieben. Das endlose Element 36 ist über einen Lenker 39 mit einem Schlitten 40 der Schleppvorrichtung 35 gekuppelt. Der Schlitten 40 ist über am Träger 22 vorgesehene Lagerböcke 41, 42 parallel zur Förderrichtung 20 hin- und herverschiebbar geführt.

An einem Ende trägt der Schlitten 40 zwei Saugteller 30, die über Druckmittelzylinder 43 in Richtung der Pfeile 31 vor und zurückgeschoben werden können.

Bei Benützung der Schleppvorrichtung 35 wird die Kupplung 38 zwischen den Umlenkrädern 15 und 37, die beispielsweise eine Magnetkupplung sein kann, eingerückt. Darauf wird der Schlitten 40 mit Fördergeschwindigkeit bewegt. Hierauf werden die Saugteller 30 vorgeschoben und erfassen ein Isolierglaselement 1. Sobald der am langgestreckten Element 36 liegende Anlenkpunkt des Lenkers 39 das Ende des parallel zur Förderrichtung 20 verlaufenden Trums des langgestreckten Elementes 36 erreicht hat, wird die Kupplung 38 gelöst, nachdem kurz zuvor die Saugteller 30 das Isolierglaselement 1 freigegeben haben. Durch erneutes Eindrücken der Kupplung 38 kann die Schleppvorrichtung 35 wieder in ihre Ausgangslage zurückbewegt werden.

Es ist freilich auch möglich, durch entsprechende Steuerung der Saugteller 30 die Kupplung am Ende der Vorwärtsbewegung des Schlittens 40 eingerückt zu lassen und die Kupplung 38 erst dann auszurücken, wenn der Schlitten 40 und damit die Schleppvorrichtung 35 ihre Ausgangsstellung erreicht haben.

Der Rückhub der Schleppvorrichtung 23 beim Ausführungsbeispiel nach Figur 1 erfolgt durch entsprechendes Beaufschlagen des Kolbens 28.

Die Schleppvorrichtungen 23 und 25 können auch auf Profilschienen geführt sein. In diesem Fall kann bei der Ausführungsform nach Figur 1 die Schiene 36 entfallen und bei der Ausführungsform nach Figur 3 nur eine der Schienen 40 vorgesehen sein.

## Patentansprüche

1. Vorrichtung zum Fördern von tafelförmigen Elementen (1), insbesondere von Isolierglasscheiben, mit einer horizontalen Förderbahn (3, 14), durch welche die aufrecht stehend bewegten, tafelförmigen Elemente (1) von unten abgestützt sind, und mit einer seitlichen Abstützung für die Elemente, wobei in der horizontalen Förderbahn (3, 14) eine Unterbrechung für die Aufnahme eines Bearbeitungswerkzeuges, insbesondere einer Düse zum Versiegeln der Randfugen von Isolierglasscheiben, vorgesehen ist, mit einer jedes tafelförmige Element (1) an mindestens einer seiner Seitenflächen erfassenden Schleppvorrichtung (23), die auf einer parallel zur horizontalen Förderbahn (3, 14) bzw. zur Förderrichtung (10) ausgerichteten Führung (25, 26) über einen Schlitten (24) im Bereich der Unterbrechung der horizontalen Förderbahn (3, 14) hin- und herverschiebbar geführt ist, wobei sich der Bewegungshub der Schleppvorrichtung (23) bis über die an die Unterbrechung in der Förderbahn (3, 14) anschliessenden Bereiche der Förderbahn (3, 14) erstreckt, dadurch gekennzeichnet, dass der Schlitten (24) der Schleppvorrichtung (23) auf einem parallel zur Förderrichtung (20) ausgerichteten Zylinder (25) geführt ist, in dem ein zum Hin- und Herverschieben der Schleppvorrichtung (23) durch Beaufschlagen mit Druckmittel hin- und herverschiebbarer Kolben (28) aufgenommen ist, wobei die Schleppvorrichtung (23) mit dem im Zylinder (25) hin- und herverschiebbaren Kolben (28) magnetisch gekuppelt ist, dass die Schleppvorrichtung (23) bei ihrer Bewegung in Förderrichtung (20) mit der die Förderbahn bildenden Transportvorrichtung (3, 14) synchronisiert ist, dass zur Synchronisierung der Schleppvorrichtung (23) oder des Schlittens (24) mit der die Förderbahn bildenden Transportvorrichtung (3, 14) als Kupplung sowohl an der Transportvorrichtung (14) bzw. bei Förderbahnen mit mehreren Transportvorrichtungen an wenigstens einer Transportvorrichtung als auch am Schlitten (24) der Schleppvorrichtung (23) aneinander anlegbare Anschläge (32, 33) vorgesehen sind und dass der am Schlitten (24) vorgesehene Anschlag (32) durch Druckbeaufschlagung des Kolbens (28) im Zylinder (25) in Förderrichtung (20) gesehen von hinten an den Anschlag (33) an der Transportvorrichtung (14) anlegbar ist.

2. Vorrichtung nach Anspruch 1, dadurch gekennzeichnet, dass die Schleppvorrichtung (23) mindestens einen quer zur Förderrichtung (20) auf den zu befördernden tafelförmigen Bauteil (1), vorzugsweise durch einen Druckmittelmotor (43) vorschiebbaren Saugteller (30) umfasst.

3. Vorrichtung nach Anspruch 1, dadurch gekennzeichnet, dass eine parallel zum Zylinder (25) verlaufende Führungsschiene (26) vorgesehen ist und dass der Schlitten (24) sowohl durch einen auf der Aussenfläche des Zylinders (25) gleitenden Ring (27) als auch auf der Führungsschiene (26) geführt ist.

## Claims

1. Apparatus for conveying panel-shaped elements (1), in particular insulating glass panes, comprising a horizontal conveyor path (3, 14) by means of which the panel-shaped elements (1) which are moved in an upright position are supported from below, and comprising a lateral support means for the elements, wherein disposed in the horizontal conveyor path (3, 14) is an interruption for receiving a processing tool, in particular a nozzle for sealing the edge gaps of insulating glass panes, comprising a pulling means (23) which engages each panel-shaped element (1) at at least one of the side surfaces thereof and which is reciprocatingly guided by way of a carriage (24) in the region of the interruption in the horizontal conveyor path (3, 14), on a guide means (25, 26) which is oriented parallel to the horizontal conveyor path (3, 14) or the direction of conveying movement (20), wherein the stroke movement of the pulling means (23) extends to above the regions of the conveyor path (3, 14) adjoining the interruption in the conveyor path (3, 14), characterised in that the carriage (24) of the pulling means (23) is guided on a cylinder (25) which is oriented parallel to the direction of conveying movement (20) and in which is accommodated a piston (28) which can be reciprocated by being supplied with pressure medium, for the reciprocating movement of the pulling means (23), wherein the pulling means (23) is magnetically coupled to the piston (28) which is reciprocatable in the cylinder (25), that the pulling means (23) is synchronised in its movement in the direction of conveying movement (20) with the transportation means (3, 14) forming the conveyor path, that for the purposes of synchronisation of the pulling means (23) or the carriage (24) with the transportation means (3, 14) forming the conveyor path, abutments (32, 33) which can come into contact with each other are provided as coupling means both on the transportation means (14) or in the case of conveyor paths having a plurality of transportation means on at least one transportation means and also on the carriage (24) of the pulling means (23), and that the abutment (32) provided on the carriage (24) can be caused to come into contact against the abutment (33) on the transportation means (14) by pressure actuation of the piston (28) in the cylinder (25), from behind as considered in the direction of conveying movement (20).

2. Apparatus according to claim 1 characterised in that the pulling means (23) includes at least one suction plate (30) which can be advanced transversely with respect to the direction of conveying movement (20) on to the panel-shaped component (1) to be conveyed, preferably by a pressure medium-operated motor (43).

3. Apparatus according to claim 1 characterised in that there is provided a guide rail (26) which extends parallel to the cylinder (25) and that the carriage (24) is guided both by a ring (27) sliding on the outside surface of the cylinder (25), and also on the guide rail (26).

**Revendications**

1. Dispositif pour transporter des éléments (1) en forme de plaque, notamment des plaques de verre isolant, doté d'une voie transporteuse (3, 14) horizontale au moyen de laquelle les éléments (1) en forme de plaque, déplacés en position debout, sont supportés à leurs partie inférieure, d'un support latéral pour les éléments, une discontinuité étant prévue dans la voie transporteuse (3, 14) horizontale pour recevoir un outil de traitement, en particulier une buse pour sceller les bords des plaques de verre isolant, et d'un dispositif remorqueur (23) saisissant chaque élément (1) en forme de plaque par l'une au moins de ses faces latérales et guidé en va-et-vient, dans la zone correspondant à la discontinuité de la voie transporteuse (3, 14) horizontale, au moyen d'un chariot (24), sur un guide (25, 26) orienté parallèlement à la voie transporteuse (3, 14) horizontale ou à la direction de transport (20), la course du mouvement du dispositif remorqueur (23) allant jusqu'au-delà des zones de la voie transporteuse (3, 14) adjacentes à la discontinuité de cette dernière, caractérisé en ce que le chariot (24) du dispositif remorquer (23) est guidé sur un cylindre (25) orienté parallèlement à la direction de transport (20), dans lequel est recu un piston (28) pouvant être déplacé en va-et-vient par alimentation en fluide sous pression, en vue de déplacer en va-et-vient le disposititf remorqueur (23), ce dernier étant accouplé magnétiquement au piston (28) déplaçable en va-et-vient dans le cylindre (25), en ce que le dispositif remorqueur (23) est synchronisé, lors de son mouvement dans la direction du transport (20), avec le dispositif transporteur (3, 14) constituant la voie transporteuse, en ce qu'en vue de la synchronisation du dispositif remorqueur (23) ou du chariot (24) avec le dispositif transporteur (3, 14) constituant la voie transporteuse, des butées (32, 33) pouvant être placées l'une contre l'autre sont prévues en tant qu'accouplement, tant sur le dispositif transporteur (14) ou, dans le cas de voies transporteuses à plusieurs dispositifs transporteurs, sur au moins un dispositif transporteur, que sur le chariot (24) du dispositif remorqueur (23), et en ce que la butée (32) prévue sur la chariot (24) peut être appliquée, par alimentation en fluid sous pression du piston (28) dans le cylindre (25), vu dans la direction de transport (20) de derrière, contre la butée (33) du dispositif transporteur (14).

2. Dispositif selon la revendication 1, caractérisé en ce que le dispositif remorqueur (23) comprend au moins un plateau à ventouse (30) pouvant être avancé, de préférence au moyen d'un moteur (43) à fluid sous pression, transversalement par rapport à la direction de transport (20), sur l'élément (1) en forme de plaque à transporter.

3. Dispositif selon la revendication 1, caractérisé en ce qu'est prévu un rail de guidage (26) s'étendant parallèlement au cylindre (25), et en ce que le chariot (24) est guidé, tant par un anneau (27) glissant sur la face extérieure du cylindre (25), que sur le rail de guidage (26).

FIG.1

FIG.2

FIG.3